# EUROPEAN PATENT SPECIFICATION

(11) **EP 3 198 128 B1**
(45) Date of publication and mention of the grant of the patent: **27.06.2018**
(21) Application number: 15767198.3
(22) Date of filing: 14.09.2015
(51) Int. Cl.: F02D 41/06, F02D 41/22, F02D 19/06, F02D 19/10, F02D 35/02, F02D 41/00, F02N 99/00

(54) **METHOD FOR STARTING UP A DUAL FUEL ENGINE**
VERFAHREN ZUM STARTEN EINES MOTORS MIT ZWEI BRENNSTOFFEN
PROCÉDÉ DE DÉMARRAGE D'UN MOTEUR À DOUBLE CARBURANT

(30) Priority: 24.09.2014 FI 20145836
(43) Date of publication of application: 02.08.2017
(73) Proprietor: Wärtsilä Finland Oy, 65380 Vaasa (FI)
(72) Inventor: FORS, Patrik, FI-65100 Vaasa (FI); WILLIAMSON, Jonas, FI-65100 Vaasa (FI); GRÖNLUND, Tore, FI-65100 Vaasa (FI); ÖSTMAN, Jonas, FI-65100 Vaasa (FI)
(74) Representative: Berggren Oy, Helsinki & Oulu
(86) International application number: PCT/FI2015/050600
(87) International publication number: WO 2016/046448

(56) References cited:
- EP-A1- 2 915 987
- DE-A1-102008 004 078
- DE-A1-102008 007 325
- JP-A- H11 183 330

## Description

### TECHNICAL FIELD

The invention concerns in general the technology of dual-fuel diesel engines that may burn both liquid and gaseous fuel. In particular the invention concerns the engine start up phase and how a successful start up of the engine is verified.

### BACKGROUND OF THE INVENTION

A dual-fuel diesel engine may use both liquid fuel, such as fuel oil, and gaseous fuel, such as natural gas. Ensuring reliable operation the engine requires that some precautions are made at engine start phase.

It is known from a state of art document EP2136059A1 a micro-pilot injection type gas engine in which, at the start of the engine, operating conditions of the engine are taken into intermittent operation to make the control of the air-fuel ratio at the start of the engine accurate and in which the time period required for warm-up operation is reduced or eliminated. The gas engine has an on-off gas valve adapted so as to be able to change the area of a fuel gas path to each cylinder and the time period of opening and closing of the fuel gas path, a rotational speed detector for detecting the speed of the engine and a combustion diagnosis device for detecting combustion conditions of each cylinder of the engine from the pressure in the cylinder, and an intermittent valve operation control device operating according to the speed of the engine.

EP2136059A1 further discloses that at the start of the gas engine, the intermittent valve operation control device intermittently opens and closes the on-off gas valve according to a detected value of the engine speed, and, based on the detected waveform of the value of the detected combustion conditions of each cylinder obtained from the combustion diagnosis device, the intermittent valve operation control device intermittently opens and closes the on-off gas valve at an opening/closing interval which causes the air-fuel ratio to be a target value. DE102008007325 further discloses a dual fuel engine (gas-liquid) wherein pilot injectors are tested before switching to gas mode.

In this description the following term are being used:
- A term start up refers here to a chain of events changing the status of the engine from the stand still engine where the crank shaft is not rotating to the status of engine running on main fuel or just before a steady state running mode is achieved.
- A term start refers to shorter term event than the start up, for example start of rotation of the crank shaft, start of pilot fuel injection, start of main fuel injection, etc. So it is used here in general as a beginning of a certain phase or event.

Today, when starting up a dual fuel engine in diesel or gas mode, a functional check of the pilot injectors is conducted. This is currently based on a study of how the exhaust gas temperature changes due to the applied fuel amount. As the temperature measurement has some dead time because the sensor element needs to heat up and this causes some delay in achieving reliable measurement. When using this measurement of exhaust gas temperature, a large engine may need to have a temperature stabilization time of approximately 60 - 90 seconds to eliminate the heat originating from other sources than the gas fuel, like from an actuator start assist. After that the actual check of the pilot injectors can be started and that takes 5 - 30 seconds. So in all this combustion check might take about 2 minutes.

### SUMMARY OF THE INVENTION

The requirements concerning start up time of the engine get tighter especially in power plant solutions. All these preparations before the actual production run are reducing the efficiency of the power plant. Thus the object of the present invention is to reduce the time of preparations at the start up or before switching to the main fuel and thus improve the efficiency of the engine. An object is also to reduce the time the engine is running on pilot fuel before switching to the main fuel.

The present invention is characterized in that an operational check of the pilot injectors is conducted such that it is based on calculated indicated mean effective pressure (IMEP). In more detail, a method for starting up a dual fuel internal combustion piston engine, the method comprises at least following steps:
- the engine is rotated by a start assist device, which is a pneumatic or electric device or a system feeding pressurized air to cylinders of the engine,
- a pilot injector is activated and an amount of pilot fuel is injected to a cylinder,
- the injected pilot fuel / air mixture is compressed in the cylinder and ignites,
- a pressure sensor in the cylinder measures the cylinder pressure wherein before switching to a main fuel mode,
- an indicated mean effective pressure (IMEP) is calculated from the combustion of the pilot injection,
- the calculated IMEP is compared to a predetermined pressure value (PPV) caused by the pilot fuel injected to the cylinder,
- and if the calculated IMEP is within the PPV limits, the pilot injector is deemed to work properly.

Thus the present invention presents another possible way to detect that the pilot injection is working properly, it is done by using the calculated IMEP from each cylinder's cylinder pressure sensor. Using IMEP as control input gives the benefit that only the "work" done by the cylinder is measured, i.e. a signal that is 0 shows that no pilot fuel was injected during the time the pilot injectors were active alone, and by this a failing pilot injector is identified.

According to an embodiment of the invention the IMEP is calculated from each of the engine cylinders. If the calculated IMEP corresponds to the predetermined pressure value (PPV) of given pilot fuel combustion, the cylinder is deemed to be running on pilot. So when the necessary number of cylinders is running on pilot, the engine may be switched to a main gas fuel mode. Using the present method the previously used temperature stabilization time for pilot injector functionality check is completely eliminated, and the check of the IMEP readings are done in a couple of seconds. Thus especially a large engine like in a power plant solution will gain in the start up time. As the present method is significantly faster than the methods used at the moment, the present invention clearly meets the objectives of the invention.

### BRIEF DESCRIPTION OF THE DRAWINGS

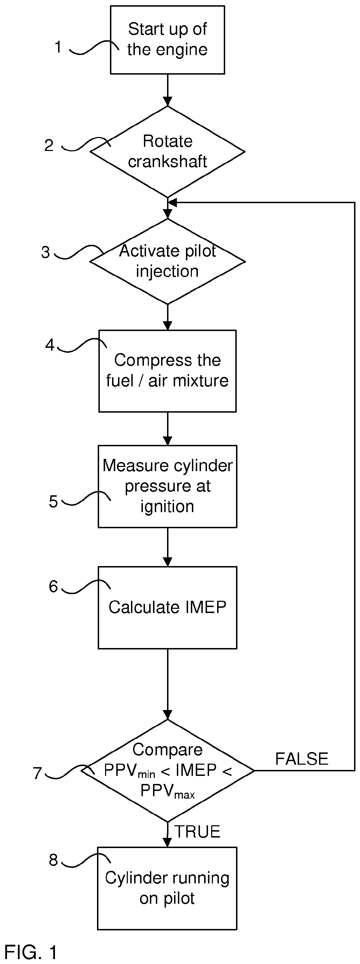

I Fig. 1 it is shown a flow chart explaining a part of the engine start procedure.

### DETAILLED DESCRIPTION

The present method for starting up a dual fuel internal combustion piston engine, the method comprises at least following steps:
- The engine is rotated by a start assist device, this start assist device may be for example a pneumatic or electric device or system feeding pressurizer air to the engine cylinders.
- A pilot injector is activated and an amount of pilot fuel is injected to a cylinder. The pilot fuel can be diesel oil or other corresponding, preferably liquid form fuel.
- The injected pilot fuel / air mixture is compressed in the cylinder and ignites. This step in conducted at the compression stroke of the cylinder.
- A pressure sensor in the cylinder measures the cylinder pressure. The actual position and type of the pressure sensor is a matter of selection by the engine manufacturer. There are plenty of suitable sensors for the purpose and the exact location depends on the construction of the combustion chamber and the cylinder head. wherein before switching to a main fuel mode,
- An indicated mean effective pressure (IMEP) is calculated from the combustion of the pilot injection. This is in most cases done by the engine control system.
- The calculated IMEP is compared to a predetermined pressure value (PPV) caused by the pilot fuel injected to the cylinder. Again, this is an internal procedure done in the engine control system.
- If the calculated IMEP is within the PPV limits, the pilot injector is deemed to work properly.

The limits of the PPV are determined separately, they are based on engine manufacturer knowledge on the engine in question, how it reacts on certain pilot injection and how much that is supposed to create pressure when converted to IMEP as the IMEP needs to be compared to some reference value, otherwise it does not reveal the failing pilot injector. Preferably the predetermined pressure value (PPV) is determined as a function of amount of the pilot fuel injected to the cylinder. The limit determination also gives understanding about the functionality of the pilot injector. Thus according to an embodiment the predetermined pressure value (PPV) is a range value having tolerance, wherein the lower limit is PPVₘᵢₙ and the upper limit is PPVₘₐₓ. At the lower limit there is a value where the pilot is not injecting enough fuel due to some failure and on the upper limit the amount of pilot fuel is too large or there is some other failure like leakage in a main fuel system. Thus it is preferred that the comparison fulfills the criteria PPVₘᵢₙ < IMEP < PPVₘₐₓ. Both the lower limit PPVₘᵢₙ and the upper limit PPVₘₐₓ is determined by the engine manufacturer based on simulations, other theoretical calculations or actual engine experiment results.

According to an embodiment the pressure sensor is arranged to measure the cylinder pressure in a continuous manner. Thus the measurement data can be used for example to determine exactly the moment when the pilot injection starts as it can be seen from the pressure curve. Thus even the pilot injection timing can be determined from the pressure sensor measurement. Also it can be seen when actually the compressed fuel / air mixture ignites.

In FIG. 1 it is shortly presented as a flow chart the main features of the present method in start up of the engine:
1. Start up of the engine, initiate the procedure
2. Rotate the crankshaft
3. Activate the pilot injection
4. Compress the fuel / air mixture
5. Measure cylinder pressure at ignition
6. Calculate IMEP
7. Compare PPVₘᵢₙ < IMEP < PPVₘₐₓ
8. Cylinder running on pilot

So if everything goes according to the procedure and the status from the step 7 is TRUE, the engine control system is given a status information that this particular cylinder is now running on pilot, as it is supposed to do. However if that last comparison gives FALSE, the process goes back to step 3 where the pilot is tried to activate again. After the same procedure is repeated with each of the engines cylinders intended to be started up and all are showing the status "Running on Pilot", the engine can start a switch to the main fuel mode -procedure.

As can be noted, this present procedure is not dependent on temperatures to be stabilized or like, just that the pressure level is at the wanted range. The status of "Running on Pilot" can be achieved in minimum of even one cycle of the engine, but in practice a couple of cycles to make sure the running on pilot is stabilized would be the normal procedure before switching to the main gas fuel mode.

As the previously described embodiments present only some of the options, especially the flow chart can be arranged to be performed various sub steps, the above explained is only one example. Thus as evident to those skilled in the art, the invention and its embodiments are not limited to the above-described embodiment examples. Expressions representing the existence of characteristics are non-restrictive such that the description of characteristics does not exclude or prerequisite the existence of such other characteristics which are not presented in the independent or dependent claims.

## Claims

1. A method for starting up a dual fuel internal combustion piston engine, the method comprising at least following steps:
- the engine is rotated by a start assist device, which is a pneumatic or electric device or a system feeding pressurized air to cylinders of the engine,
- a pilot injector is activated and an amount of pilot fuel is injected to a cylinder,
- the injected pilot fuel / air mixture is compressed in the cylinder and ignites,
- a pressure sensor in the cylinder measures the cylinder pressure,
**characterized in that,** before switching to a main fuel mode,
- an indicated mean effective pressure (IMEP) is calculated from the combustion of the pilot injection,
- the calculated IMEP is compared to a predetermined pressure value (PPV) caused by the pilot fuel injected to the cylinder,
- and if the calculated IMEP is within the PPV limits, the pilot injector is deemed to work properly.

2. The method according to claim 1, **characterized in that** IMEP is calculated from each of the engine cylinders.

3. The method according to claim 1, **characterized in that** if the calculated IMEP corresponds to predetermined pressure value (PPV) of given pilot fuel combustion, the cylinder is deemed to be running on pilot.

4. The method according to claim 3, **characterized in that** if the necessary amount of cylinders are running on pilot, the engine may be switched to a main gas fuel mode.

5. The method according to claim 1, **characterized in that** the pressure sensor is arranged to measure the cylinder pressure in a continuous manner.

6. The method according to claim 1, **characterized in that** the pilot injection timing is determined from the pressure sensor measurement.

7. The method according to claim 1, **characterized in that** the predetermined pressure value (PPV) is determined as a function of amount of the pilot fuel injected to the cylinder.

8. The method according to claim 1, **characterized in that** the predetermined pressure value (PPV) is a range value having tolerance, wherein the lower limit is PPVₘᵢₙ and the upper limit is PPVₘₐₓ.

9. The method according to claim 8, **characterized in that** the lower limit PPVₘᵢₙ is determined based on simulations, other theoretical calculations or actual engine experiment results.

10. The method according to claim 8, **characterized in that** the upper limit PPVₘₐₓ is determined based on simulations, other theoretical calculations or actual engine experiment results.

## Patentansprüche

1. Verfahren zum Starten eines Verbrennungskolbenmotors mit zwei Brennstoffen, wobei das Verfahren mindestens folgende Schritte umfasst:
- der Motor wird durch eine Starthilfevorrichtung, welche eine pneumatische oder elektrische Vorrichtung oder ein System, das Zylindern des Motors Druckluft zuführt, ist, gedreht,
- eine Voreinspritzdüse wird aktiviert und eine Zündbrennstoffmenge wird in einen Zylinder gespritzt,
- das eingespritzte Zündbrennstoff-/Luftgemisch wird im Zylinder verdichtet und entzündet sich,
- ein Drucksensor im Zylinder misst den Zylinderdruck,
**dadurch gekennzeichnet, dass** vor dem Umstellen auf einen Hauptbrennstoffmodus
- ein indizierter Mitteldruck (IMEP) aus der Verbrennung der Voreinspritzung berechnet wird,
- der berechnete IMEP mit einem vorbestimmten Druckwert (PPV) verglichen wird, der durch den Zündbrennstoff, der in den Zylinder eingespritzt wird, hervorgerufen wird,
- und wenn der berechnete IMEP innerhalb der PPV-Grenzen liegt, die Voreinspritzdüse als korrekt funktionierend erachtet wird.

2. Verfahren nach Anspruch 1, **dadurch gekennzeichnet, dass** der IMEP von jedem der Motorzylinder berechnet wird.

3. Verfahren nach Anspruch 1, **dadurch gekennzeichnet, dass** wenn der berechnete IMEP mit einem vorbestimmten Druckwert (PPV) einer gegebenen Zündbrennstoffverbrennung übereinstimmt, der Zylinder als im Pilot-Betrieb laufend angesehen wird.

4. Verfahren nach Anspruch 3, **dadurch gekennzeichnet, dass** wenn die notwendige Anzahl von Zylindern im Pilot-Betrieb laufen, der Motor auf einen Hauptgasbrennstoffmodus umgestellt werden kann.

5. Verfahren nach Anspruch 1, **dadurch gekennzeichnet, dass** der Drucksensor zum ununterbrochenen Messen des Zylinderdrucks angeordnet ist.

6. Verfahren nach Anspruch 1, **dadurch gekennzeichnet, dass** der Zeitpunkt der Voreinspritzung aus der Messung des Drucksensors bestimmt wird.

7. Verfahren nach Anspruch 1, **dadurch gekennzeichnet, dass** der vorbestimmte Druckwert (PPV) in Abhängigkeit von der in den Zylinder eingespritzten Zündbrennstoffmenge bestimmt wird.

8. Verfahren nach Anspruch 1, **dadurch gekennzeichnet, dass** der vorbestimmte Druckwert (PPV) ein Bereichswert mit Toleranz ist, wobei PPVₘᵢₙ die untere Grenze und PPVₘₐₓ die obere Grenze darstellt.

9. Verfahren nach Anspruch 8, **dadurch gekennzeichnet, dass** die untere Grenze PPVₘᵢₙ auf Grundlage von Simulationen, anderen theoretischen Berechnungen oder tatsächlichen Ergebnissen von Motorexperimenten bestimmt wird.

10. Verfahren nach Anspruch 8, **dadurch gekennzeichnet, dass** die obere Grenze PPVₘₐₓ auf Grundlage von Simulationen, anderen theoretischen Berechnungen oder tatsächlichen Ergebnissen von Motorexperimenten bestimmt wird.

## Revendications

1. Procédé pour démarrer un moteur à piston à combustion interne à double carburant, le procédé comprenant au moins les étapes suivantes :
- on fait tourner le moteur grâce à un dispositif d'assistance au démarrage, lequel est un dispositif pneumatique ou électrique ou un système alimentant en air sous pression les cylindres du moteur,
- un injecteur pilote est activé et une quantité de carburant pilote est injectée dans un cylindre,
- le mélange de carburant pilote/air injecté est comprimé dans le cylindre et s'allume,
- un capteur de pression dans le cylindre mesure la pression du cylindre,
**caractérisé en ce que**, avant de passer à un mode de carburant principal,
- une pression effective moyenne indiquée (IMEP) est calculée à partir de la combustion de l'injection pilote,
- l'IMEP calculée est comparée avec une valeur de pression prédéterminée (PPV) produite par le carburant pilote injecté dans le cylindre,
- et si l'IMEP calculée est dans les limites de la PPV, l'injecteur pilote est réputé fonctionner correctement.

2. Procédé selon la revendication 1, **caractérisé en ce que** l'IMEP est calculée à partir de chacun des cylindres du moteur.

3. Procédé selon la revendication 1, **caractérisé en ce que**, si l'IMEP calculée correspond à une valeur de pression prédéterminée (PPV) d'une combustion de carburant pilote donnée, le cylindre est réputé fonctionner sur une base pilote.

4. Procédé selon la revendication 3, **caractérisé en ce que**, si la quantité nécessaire de cylindres fonctionnent sur une base pilote, on peut faire passer le moteur à un mode de carburant gazeux principal.

5. Procédé selon la revendication 1, **caractérisé en ce que** le capteur de pression est étudié pour mesurer la pression du cylindre de manière continue.

6. Procédé selon la revendication 1, **caractérisé en ce que** le calage de l'injection pilote est déterminé à partir de la mesure du capteur de pression.

7. Procédé selon la revendication 1, **caractérisé en ce que** la valeur de pression prédéterminée (PPV) est déterminée en tant qu'une fonction de la quantité de carburant pilote injectée dans le cylindre.

8. Procédé selon la revendication 1, **caractérisé en ce que** la valeur de pression prédéterminée (PPV) est une plage de valeurs ayant une tolérance, dans lequel la limite inférieure est PPVₘᵢₙ et la limite supérieure est PPVₘₐₓ.

9. Procédé selon la revendication 8, **caractérisé en ce que** la limite inférieure PPVₘᵢₙ est déterminée sur la base de simulations, d'autres calculs théoriques, ou de résultats expérimentaux réels du moteur.

10. Procédé selon la revendication 8, **caractérisé en ce que** la limite supérieure PPVₘₐₓ est déterminée sur la base de simulations, d'autres calculs théoriques, ou de résultats expérimentaux réels du moteur.
